(19) Europäisches Patentamt
European Patent Office
Office européen des brevets

(11) **EP 4 439 417 A1**

(12) **EUROPEAN PATENT APPLICATION**

(43) Date of publication:
**02.10.2024 Bulletin 2024/40**

(21) Application number: **24166413.5**

(22) Date of filing: **26.03.2024**

(51) International Patent Classification (IPC):
***G06Q 10/06*** (2023.01)

(52) Cooperative Patent Classification (CPC):
**G06Q 10/06**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **29.03.2023 JP 2023054274**

(71) Applicants:
• **DENSO CORPORATION**
  **Aichi-pref. 448-8661 (JP)**
• **HONDA MOTOR CO., LTD.**
  **Minato-ku**
  **Tokyo 107-8556 (JP)**

(72) Inventors:
• **OKABE, Tatsuya**
  **Kariya-city, Aichi-pref.,, 448-8661 (JP)**
• **NAGATA, Koichi**
  **Kariya-city, Aichi-pref.,, 448-8661 (JP)**
• **TACHIBANA, Dan**
  **Wako-shi, Saitama,, 351-0193 (JP)**
• **AIKAWA, Koichiro**
  **Wako-shi, Saitama,, 351-0193 (JP)**
• **TANIHATA, Akito**
  **Minato-ku, Tokyo, 107-8556 (JP)**
• **TABUSHI, Isao**
  **Minato-ku, Tokyo, 107-8556 (JP)**

(74) Representative: **Winter, Brandl - Partnerschaft mbB**
  **Alois-Steinecker-Straße 22**
  **85354 Freising (DE)**

(54) **INFORMATION PROCESSING METHOD, INFORMATION PROCESSING PROGRAM, AND DATA PROCESSING SYSTEM**

(57)     An information processing method includes, by at least one processor (11): determining (S107) whether there is an unconfirmed portion of the emissions associated with a target object (IM); and generating (S111), when there is the unconfirmed portion of the emissions, unconfirmed portion data indicating the unconfirmed portion of the emissions in addition to confirmed portion data indicating a confirmed portion of the emissions as the emissions information of the target object (IM).

FIG. 3

EP 4 439 417 A1

**Description**

TECHNICAL FIELD

The disclosure in this specification relates to a technology for processing and accumulating emissions information related to greenhouse gas emissions.

BACKGROUND

Examples of related art include JP7178064B which discloses a derivation device for deriving the total greenhouse gas emissions associated with a product. The derivation device of JP7178064B is capable of deriving not only Scope 1 emissions directly emitted by a business operator itself, but also Scope 2 emissions emitted indirectly and Scope 3 emissions emitted by supply chain activities.

PRIOR ART LITERATURES

PATENT LITERATURE

Patent Literature 1: JP 7178064 B

SUMMARY

In reality, it is difficult to confirm all the greenhouse gas emissions associated with a product at the time of product manufacturing. In particular, as disclosed in JP 7178064B, it will be difficult to confirm emissions to be allocated to individual products as early as greenhouse gas emissions of Scope 3. However, JP 7178064B does not contemplate handling of an unconfirmed portion of emissions that cannot be confirmed at the time of manufacturing.

One objective of the present disclosure is to provide an information processing method, an information processing program, a data processing system, a data display device, an information accumulation method, an information accumulation program, and a data accumulation system capable of appropriately handling an unconfirmed portion of greenhouse gas emissions.

One aspect of the present disclosure is an information processing method for processing emissions information related to an amount of greenhouse gas emissions associated with a target object. The information processing method includes: by at least one processor, determining whether there is an unconfirmed portion of the emissions associated with the target object; and generating, when there is the unconfirmed portion of the emissions, unconfirmed portion data indicating the unconfirmed portion of the emissions in addition to confirmed portion data indicating a confirmed portion of the emissions as the emissions information of the target object.

Another aspect of the present disclosure is an information processing program for processing emissions information related to an amount of greenhouse gas emissions associated with a target object. The information processing program causes at least one processor to execute: determining whether there is an unconfirmed portion of the emissions associated with the target object; and generating, when there is the unconfirmed portion of the emissions, unconfirmed portion data indicating the unconfirmed portion of the emissions in addition to confirmed portion data indicating a confirmed portion of the emissions as the emissions information of the target object.

Another aspect of the present disclosure is a data processing system for processing emissions information related to an amount of greenhouse gas emissions associated with a target object. The data processing system includes: an unconfirmed portion determination unit that is configured to determine whether there is an unconfirmed portion of the emissions associated with the target object; and a data generation unit that is configured to generate, when there is the unconfirmed portion of the emissions, unconfirmed portion data indicating the unconfirmed portion of the emissions in addition to confirmed portion data indicating a confirmed portion of the emissions as the emissions information of the target object.

In these aspects, when there is an unconfirmed portion of emissions associated with a target object, it is possible to generate or display unconfirmed portion data indicating the unconfirmed portion of emissions. In this way, by separating unconfirmed portion data from confirmed portion data, it becomes possible to appropriately handle the unconfirmed portion of greenhouse gas emissions.

BRIEF DESCRIPTION OF DRAWINGS

FIG. 1 is a block diagram showing an overall image of an information processing system according to a first embodiment of the present disclosure;
FIG. 2 is a diagram for describing a method of assigning greenhouse gas emissions to products due to mold changes;
FIG. 3 is a diagram showing details of emissions information accumulated in a database and details of display of the emissions information;
FIG. 4 is a diagram showing details of an overall flow showing a flow of product manufacturing;
FIG. 5 is a flowchart showing details of a first accumulation process;
FIG. 6 is a diagram showing an example of line names defined in the first accumulation process;
FIG. 7 is a flowchart showing details of a second accumulation process;
FIG. 8 is a flowchart showing details of a third accumulation process;
FIG. 9 is a flowchart showing details of a fourth accumulation process;
FIG. 10 is a sequence diagram showing details of a carbon footprint disclosure process performed by a data processing server and a user terminal;
FIG. 11 is a flowchart showing details of a second accumulation process of a second embodiment;
FIG. 12 is a flowchart showing details of a third accumulation process of the second embodiment; and
FIG. 13 is a flowchart showing details of a fourth accumulation process of the second embodiment.

DESCRIPTION OF EMBODIMENTS

Hereinafter, multiple embodiments of the present disclosure will be described with reference to the drawings. Duplicate description may be omitted by assigning the same reference numerals to the corresponding components in each embodiment. When only a part of the configuration is described in each embodiment, the configurations of the other embodiments described above can be applied to the other parts of the configuration. Not only the combinations of the configurations explicitly illustrated in the description of each embodiment, but also the configurations of multiple embodiments can be partially combined even when they are not explicitly illustrated when there is no problem in the combination in particular. Unspecified combinations of the configurations described in the multiple embodiments and the modifications are also disclosed in the following description.

(First embodiment)

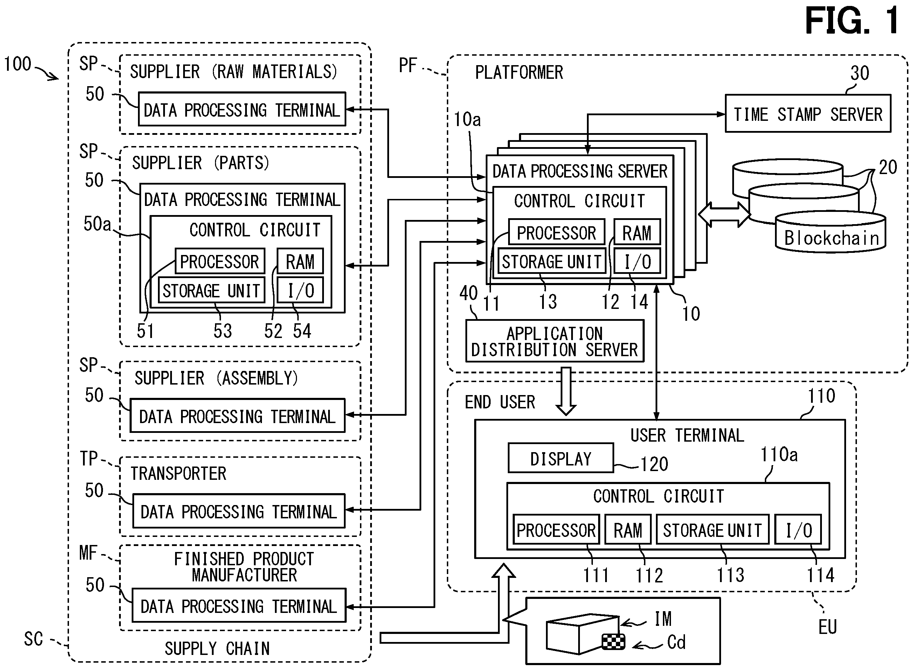

An information processing system 100 according to a first embodiment of the present disclosure shown in FIG. 1 enables carbon footprint calculation and verification in the entirety of a supply chain SC. The supply chain SC is a connection between traders to deliver industrial products, agricultural products, seafood, and the like to an end user EU. The supply chain SC is constructed by a large number of traders. As an example, the supply chain SC that supplies industrial products to the end user EU includes a large number of suppliers SP who procure raw materials, manufacture parts, assemble parts, and the like, a transporter TP, a finished product manufacturer MF, and the like as traders. The traders may further include secondary users of a final product, recyclers, and the like. The final product supplied by the supply chain SC may be various articles, such as automobiles, batteries, semiconductors, fresh produce, seafood, foods, flowers, pharmaceuticals, and chemicals, for example.

The information processing system 100 uses materials, parts, assemblies, final products, and the like supplied by the supply chain SC as target objects IM. The information processing system 100 processes emissions information related to greenhouse gas emissions (hereinafter referred to as GHG emissions) associated with the target object IM. Specifically, the information processing system 100 continuously collects and accumulates emissions information associated with the target object IM, and provides the accumulated emissions information to each trader, end user EU, regulatory agency, and the like.

To be specific, the information processing system 100 acquires primary data indicating the GHG emissions emitted during each process of manufacturing, distribution, and sales of the target object IM as emissions information, and accumulates the primary data in a database 20. The information processing system 100 may further be capable of acquiring GHG emissions associated with use and maintenance in the end user EU, GHG emissions from processes such as raw material mining and recycling, and GHG emissions from processes related to disposal such as incineration and landfilling. The information processing system 100 adds up the GHG emissions of each trader based on the accumulated emissions information and visualizes the resulting data as a carbon footprint for each product of the target object IM. The information processing system 100 realizes traceability of carbon footprints and also makes it possible to guarantee the certainty (validity of numerical values) of carbon footprints.

As an example, within the European Union, all batteries sold for automobiles, industrial use, portable, and the like are required to display their carbon footprint (EU battery regulations). The information processing system 100 is suitable for application to a supply chain SC that supplies products such as batteries that are required to display carbon footprints.

[Carbon Footprint]

The greenhouse gas whose emissions are recorded as a carbon footprint may be only carbon dioxide, or may contain methane, nitrous oxide, hydrofluorocarbons, perfluorocarbons, sulfur hexafluoride, and the like, as appropriate. In this case, greenhouse gas emissions other than carbon dioxide are converted to carbon dioxide emissions and included in the carbon footprint value presented.

GHG emissions (supply chain emissions), which are accumulated as a carbon footprint, are the sum of GHG emissions classified into Scopes 1 to 3. GHG emissions of Scope 1 (hereinafter referred to as Scope 1 emissions) are GHG emissions directly emitted from emission sources owned or managed by a business operator such as a supplier SP. For example, emissions from fuel used at a business operator's factory at the time of manufacturing correspond to Scope 1 emissions.

GHG emissions of Scope 2 (hereinafter referred to as Scope 2 emissions) are GHG emissions that are indirectly emitted when a business operator uses purchased energy such as electricity, heat, and steam. For example, emissions associated with the generation of purchased electricity correspond to Scope 2 emissions.

GHG emissions that are subject to carbon neutrality generally include Scope 1 emissions and Scope 2 emissions.

GHG emissions of Scope 3 (hereinafter referred to as Scope 3 emissions) are GHG emissions excluding Scope 1 emissions and Scope 2 emissions. Scope 3 emissions are further classified into 15 categories depending on the activity content. Scope 3 emissions are the sum of GHG emissions derived for each category. For example, emissions associated with procurement of raw materials, employee business trips, outsourcing of waste treatment, and the like correspond to Scope 3 emissions. Scope 3 emissions generally qualify for net zero.

[Configuration of Information Processing System 100]

The information processing system 100 includes a large number of data processing terminals 50, a data processing server 10, a time stamp server 30, an application distribution server 40, and the like. A user terminal 110 may be further included in the configuration of the information processing system 100. Each element constituting the information processing system 100 is connected to the network as one node, and is capable of communicating with each other.

The data processing terminal 50 is an information processing device operated by traders such as the supplier SP, the transporter TP, and the finished product manufacturer MF involved in the manufacturing process of the final product supplied by the supply chain SC. The data processing terminal 50 is installed at a business base or the like of the trader. Products such as materials, parts, and assemblies shipped from the business bases of previous process traders are delivered to each business base. The delivered products undergo processing and other processing at the business base of the own process, and are shipped as new products to the business base of the trader in the subsequent process.

Identification information for identifying each product is attached to products exchanged between the traders. For the identification information, unique ID information (hereinafter referred to as a unique ID) issued by the data processing server 10, a hash value generated with a predetermined number of bits, or the like is used. The identification information is recorded on, for example, a two-dimensional code Cd such as a QR code (registered trademark) or an RF tag, and distributed together with the product. The identification information may be updated for each trader, or the same information may be continuously used between multiple traders.

The data processing terminal 50 has a configuration that mainly includes a control circuit 50a. The control circuit 50a includes a processor 51, a RAM 52, a storage unit 53, an input/output interface 54, a bus connecting these components, and the like, and functions as a computer that performs calculation processing. The processor 51 is hardware for calculation processing coupled with the RAM 52. The processor 51 executes application programs (such as a transaction record accumulation program and an emissions information accumulation program) stored in the storage unit 53. The input/output interface 54 is electrically connected to input devices such as a keyboard and a mouse, a display, a scanner or camera for reading identification information, a printer for outputting identification information onto a paper medium, an RF tag, and the like.

The data processing terminal 50 reads the identification information through processing based on the transaction record accumulation program, and acquires information such as what was purchased from which trader (previous process supplier SP or the like) and when it was delivered, as transaction records related to the product. The data processing terminal 50 acquires emissions information indicating the GHG emissions related to the manufacture of distributed products shipped from its own process through processing based on the emissions information accumulation program. The data processing terminal 50 transmits transaction records and emissions information to the data processing server 10.

The data processing server 10, the time stamp server 30, and the application distribution server 40 are server devices operated by an administrator of the supply chain SC or a platformer PF selected by the administrator. The administrator is, for example, a finished product manufacturer MF or a regulatory agency that has supervisory authority over the final product supplied by the supply chain SC. The platformer PF is a business operator that provides large-scale information processing resources on the Internet, or an alliance (for example, Catena-X, or the like) that aims to share data across the entire supply chain SC. The data processing server 10, the time stamp server 30, and the application distribution server 40 may be on-premises server devices that are physically managed by an administrator, a platformer PF, or the like, or may be a virtual configuration provided on the cloud. The data processing server 10, the time stamp server 30, and the application distribution server 40 may be managed by mutually different administrators or platformers PF.

The data processing server 10 is an information processing device that mainly includes a control circuit 10a. The control circuit 10a includes a processor 11, a RAM 12, a storage unit 13, an input/output interface 14, a bus connecting these components, and the like, and functions as a high-performance computer that performs calculation processing at high speed. The processor 11 is hardware for calculation processing coupled with the RAM 12. The processor 11 accesses the RAM 12 to execute various processes related to data management and provision. An information management program that implements functions related to data management, and an information provision program that implements functions related to data provision are stored in the storage unit 13. The information management program is a program (information processing program) for causing the data processing server 10 to perform an information accumulation method of the present disclosure. The information provision program is a program (information processing program) for causing the data processing server 10 to perform an information processing method of the present disclosure.

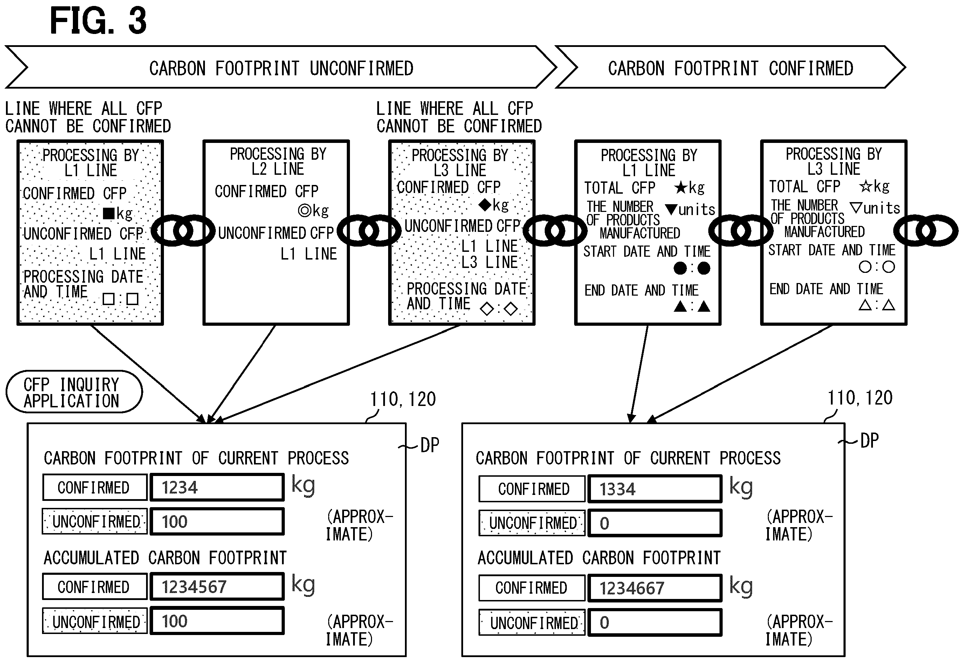

The data processing server 10 receives and acquires transaction records and emissions information transmitted by the data processing terminal 50. The data processing server 10 stores the acquired transaction records and emissions information in the database 20 as traceability information of the target object IM (hereinafter referred to as traceability information). In traceability information, a large amount of accumulated emissions information is linked to each other based on transaction records (see FIG. 3). The database 20 may be constructed within an on-premises file server managed by the platformer PF, or may be constructed within a virtual file server provided on the cloud.

The database 20 uses a blockchain technology to store data to be stored including transaction records and emissions information (traceability information) in a substantially non-tamperable state. As an example, the database 20 stores data to be stored as a transaction in a block of a private blockchain. The database 20 makes it difficult to tamper with the data to be stored, which is stored in each block, by hashing information stored in one block and storing the information in the next block. As another example, the database 20 may make it virtually impossible to tamper with the data to be stored by storing a hash value generated from the data to be stored in a block of a consortium type or public blockchain.

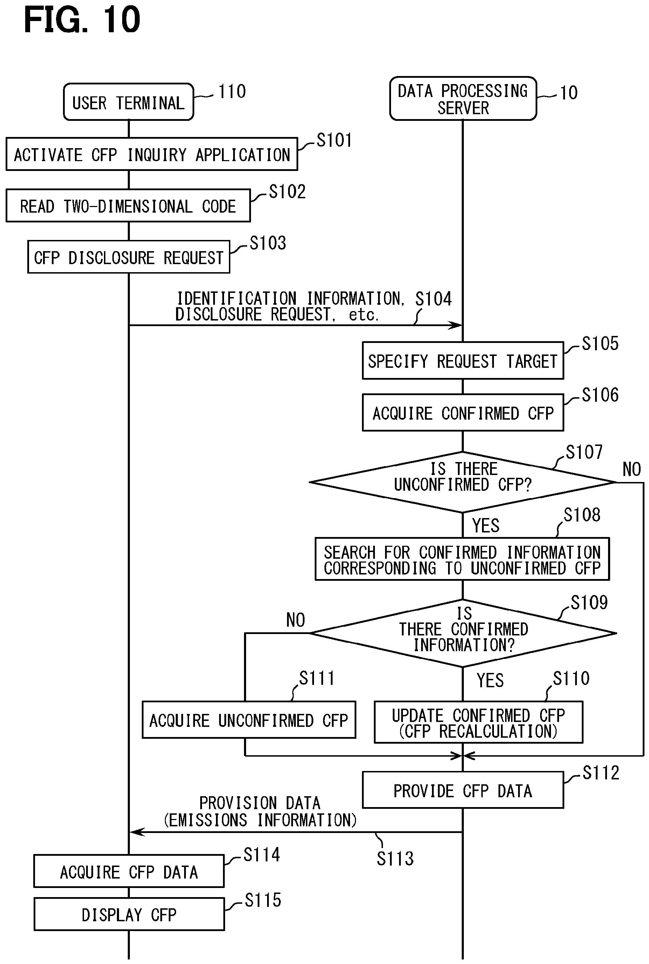

The data processing server 10 receives and acquires a carbon footprint inquiry request transmitted by the user terminal 110 (see FIG. 10). The data processing server 10 extracts the transaction record of the target object IM designated in the inquiry request from among the traceability information accumulated in the database 20. The data processing server 10 further extracts emissions information related to the target object IM from the database 20 based on the transaction record. The data processing server 10 calculates a carbon footprint of the target object IM using the extracted emissions information, and transmits the calculated result to the user terminal 110 which is a request source as provision data (see FIG. 10).

The time stamp server 30 is a server device that mainly includes a computer. The time stamp server 30 creates input information using news articles distributed by a news distribution server or the like. The time stamp server 30 generates a hash value of a predetermined number of bits (for example, 256 bits) as time stamp data by inputting the created input information into a hash function. The time stamp data is provided to the data processing server 10 and is stored in the database 20 together with the traceability information as verification data for verifying whether the acquisition time or storage time of the traceability information has been tampered with.

The application distribution server 40 is a server device that mainly includes a computer. The application distribution server 40 distributes a carbon footprint inquiry application (hereinafter referred to as a CFP inquiry application) to the user terminal 110 through the network. The CFP inquiry application is an application for inquiring about the carbon footprint of distributed products or final products. The CFP inquiry application is downloaded from the application distribution server 40 to the storage unit 113 of the user terminal 110, and is automatically installed on the user terminal 110 after the download has been completed. The application distribution server 40 may be, for example, a server device managed by the vendor of the operating system of the user terminal 110.

The user terminal 110 is a smartphone, a tablet terminal, a dedicated reading terminal, or the like owned by the end user EU. The user terminal 110 includes a camera, a terminal communication device, and the like, in addition to a control circuit 110a and a display 120. The control circuit 110a includes a processor 111, a RAM 112, a storage unit 113, an input/output interface 114, a bus connecting these components, and the like, and functions as a computer that performs calculation processing.

The above-mentioned CFP inquiry application is installed on the user terminal 110. The user terminal 110 functions as an information display device that displays the carbon footprint on a display screen DP of the display 120 by executing the CFP inquiry application by using the processor 111. The user terminal 110 cooperates with the data processing server 10 to perform a CFP disclosure process (see FIG. 10), which will be described later.

[Issues in Using Primary Data]

From the viewpoint of fairness, it is desirable that the carbon footprint described above is calculated using an actual value (primary data) of GHG emissions actually emitted by each trader. However, it is difficult to calculate the carbon footprint using primary data, and in general, pre-registered numerical values (secondary data), such as average values for each industry, are often used to calculate carbon footprints. When calculating carbon footprints that include Scope 2 emissions and Scope 3 emissions, the use of primary data becomes even more difficult.

To explain the reason in detail, for example, GHG emissions other than business bases (factories or the like) of traders do not occur regularly, but occur irregularly, and are subject to large fluctuations. Such GHG emissions include, for example, GHG emissions associated with facility construction, GHG emissions associated with line renovation, GHG emissions associated with line air conditioning (blower operation or the like), GHG emissions associated with energy consumption in factory administration buildings, and the like. It would be extremely unfair to allocate these GHG emissions to products that happened to be in manufacturing at the time of their occurrence, and in order to maintain fairness, it is desirable to allocate irregularly occurring GHG emissions equally to all related products.

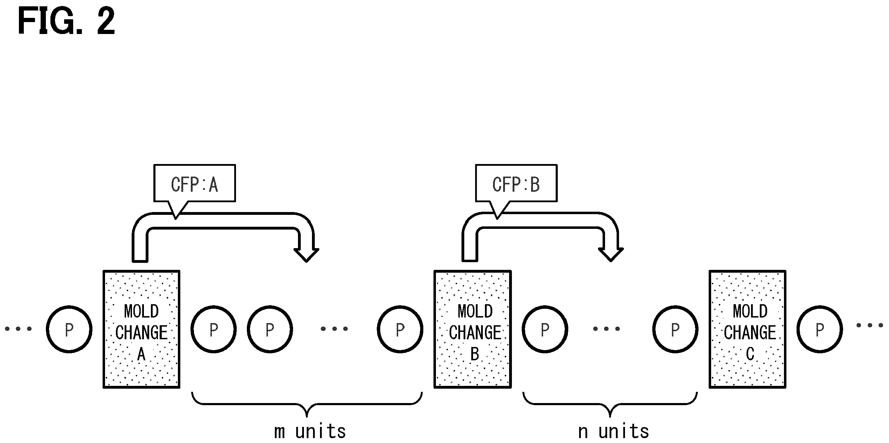

However, as shown in FIG. 2, for example, GHG emissions due to a change in molding die can be allocated to individual products (parts or the like) only after the number of products to be manufactured is determined. Specifically, the number of products to which GHG emissions associated with a specific mold change A are allocated (hereinafter referred to as the CFP distribution number, m) is unknown at the time of mold change A, and is confirmed only at the timing when the next mold change B is performed. Therefore, the GHG emissions associated with mold change A cannot be allocated to individual products until the next mold change B. Similarly, the CFP distribution number (n) of GHG emissions associated with mold change B is confirmed only at the timing when the next mold change C is performed. Therefore, the GHG emissions associated with mold change B cannot also be allocated to individual products until the next mold change C. As described above, when primary data is used, GHG emissions cannot be allocated until the CFP distribution number is determined, and therefore it is inevitable that there will be a period during which the carbon footprint cannot be calculated.

[Carbon Footprint Accumulation Process]

To address these issues, in the information processing system 100 according to the present disclosure, a carbon footprint for which the CFP distribution number cannot be confirmed is treated as an unconfirmed carbon footprint (hereinafter referred to as an unconfirmed CFP) (see the left side of FIG. 3). That is, in the emissions information accumulated in the database 20, an unconfirmed CFP is separated from confirmed carbon footprints (hereinafter referred to as a confirmed CFP). At the stage where the CFP distribution number is not confirmed, an approximate value is displayed as an unconfirmed CFP. A provisional value prepared in advance and guaranteed to have a certain degree of certainty, such as the above-mentioned secondary data, may be used for such an approximate value.

At the stage when the CFP distribution number is confirmed, a confirmed portion of GHG emissions (total CFP) will be newly registered as emissions information in the traceability information of the database 20 (blockchain) in a state that can be associated with the unconfirmed CFP (see the right side of FIG. 3). Accordingly, even when there is an unconfirmed CFP, by calculating an additional confirmed CFP using the confirmed information associated with this unconfirmed CFP and adding the calculated value to the initial confirmed CFP, it becomes possible to accurately and fairly calculate and display the confirmed CFP.

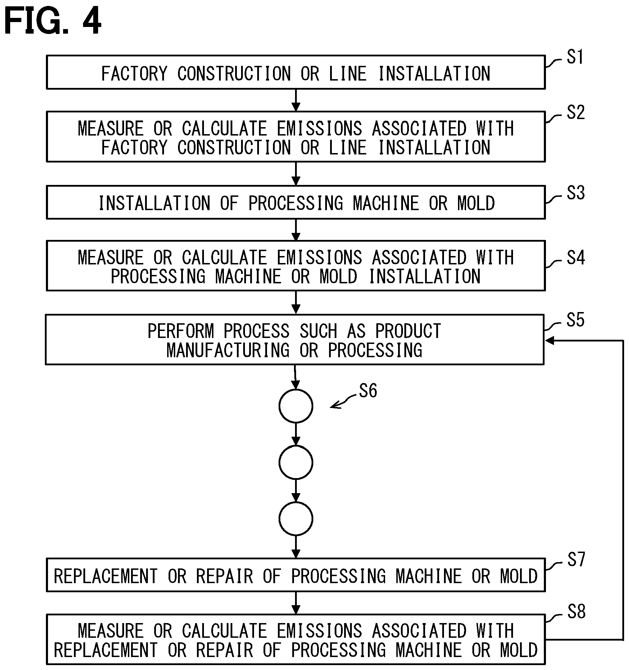

Hereinafter, in relation to such data processing, details of the overall flow showing the flow of product manufacturing at the supplier SP, the finished product manufacturer MF, and the like and details of the information processing flow associated with each step of the overall flow will be described below based on FIGS. 4 to 9 and with reference to FIGS. 1 to 3.

<Overall Flow>

As shown in FIG. 4, when a factory is constructed or a line is installed at the supplier SP or the finished product manufacturer MF (S1), a first accumulation process related to the measurement and/or calculation of GHG emissions associated with this factory construction or line installation is performed (S2). When processing machines, molding dies, or the like are installed in a newly installed factory or line (S3), a second accumulation process related to the measurement and/or calculation of GHG emissions associated with this process is performed (S4). When a process such as product manufacturing or processing is performed (S5), a third accumulation process related to measurement and/or calculation of GHG emissions associated with this process is performed (S6).

After the start of parts manufacturing and the like, a processing machine or a molding die is replaced or repaired at a specific timing (S7). At this time, a fourth accumulation process related to measurement and/or calculation of GHG emissions associated with replacement or repair is performed (S8). When maintenance of the line is completed, the process of manufacturing or processing the product is performed again (S5), and the processes of S5 to S8 are repeated. The first to fourth accumulation processes are performed by the data processing server 10 cooperating with the data processing terminal 50.

<Information Processing Flow: First Accumulation Process S2>

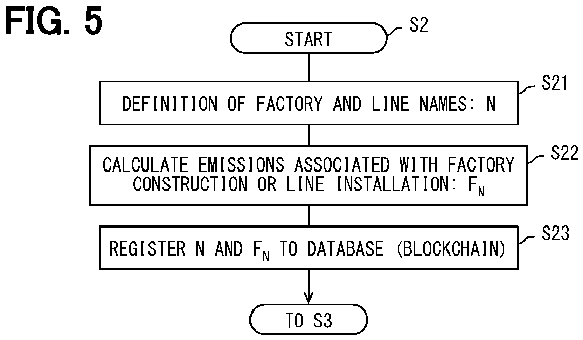

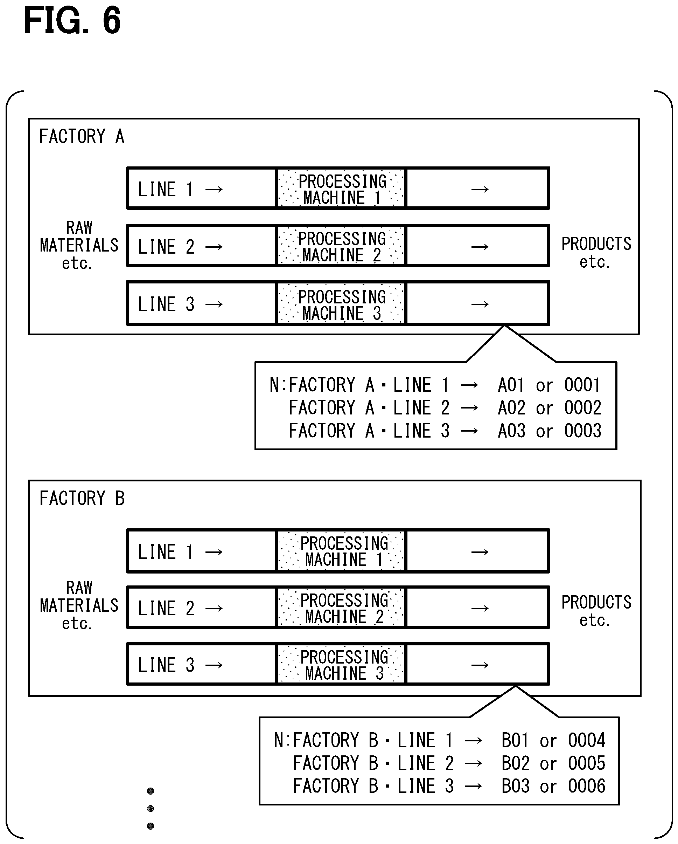

As shown in FIG. 5, in the first accumulation process (S2) associated with the construction of a factory or the installation of a line, names N of the factory and line are first defined (S21). Based on a request from the data processing terminal 50, the data processing server 10 defines a unique name N that does not overlap other factories or lines. The name N is identification information for identifying a production line of each product. As an example, the data processing server 10 defines names A01 to A03 for lines 1 to 3 of factory A (see the upper part of FIG. 6). Similarly, the data processing server 10 defines names B01 to B03 for lines 1 to 3 of factory B (see the lower part of FIG. 6). As another example, the data processing server 10 defines names 0001 to 0003 for lines 1 to 3 of factory A (see the upper part of FIG. 6). Similarly, the data processing server 10 defines names 0004 to 0006 for lines 1 to 3 of factory B (see the lower part of FIG. 6).

After defining the name N, the data processing server 10 calculates GHG emissions $F_N$ associated with factory construction or line installation (S22). The data processing server 10 registers the name N and the GHG emissions $F_N$ as traceability information (emissions information) in the database 20 (blockchain) (S23). The process of calculating the GHG emissions $F_N$ may be performed by the data processing terminal 50.

<Information Processing Flow: Second Accumulation Process S4>

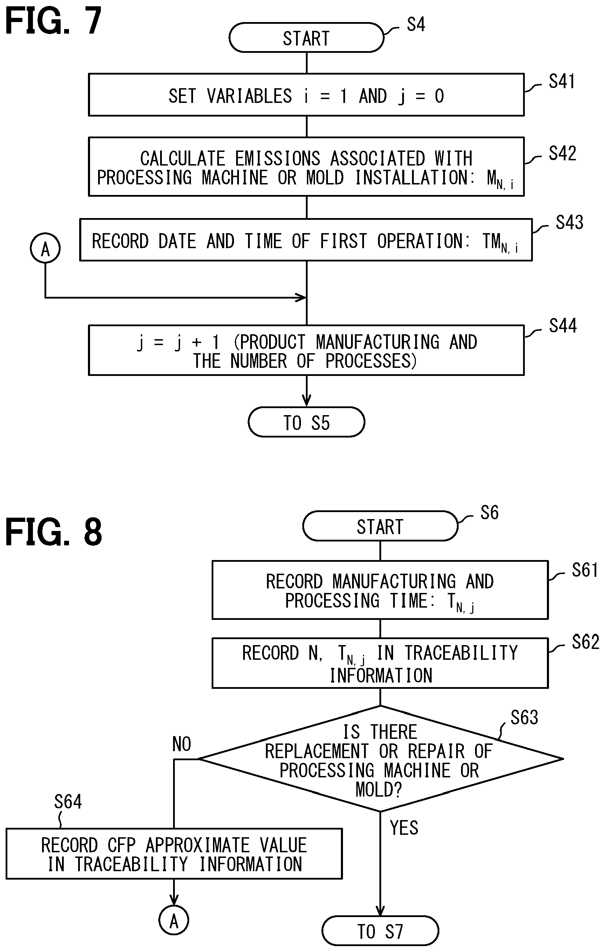

As shown in FIG. 7, in the second accumulation process (S4) associated with the installation of processing machines, molding dies, or the like, variables i and j are set to 1 and 0, respectively (S41). The variable i is a variable (serial number) that counts the number of times the processing machines or molding dies are installed. The variable i is counted up when a line is replaced or repaired. The variable i can be used as information for distinguishing between before and after the replacement or repair that occurred in a line. The variable j is a variable (serial number) that counts the number of products manufactured. The variable j is counted up as the product is manufactured.

The data processing server 10 calculates the GHG emissions $M_{N,i}$ associated with the installation of processing machines, molding dies, or the like (S42). The data processing server 10 records the date and time $TM_{N,i}$ of the first operation of the processing machines or molding dies after the change (S43). The variable j is counted up (S44). The process of calculating the GHG emissions $M_{N,i}$ and the process of counting up the variable j may be performed by the data processing terminal 50.

<Information Processing Flow: Third Accumulation Process S6>

In the third accumulation process (S6) shown in FIG. 8, assuming that there will be an unconfirmed portion (unconfirmed CFP) in the GHG emissions associated with the product (target object IM), tracking information for linking confirmed information generated after confirming the unconfirmed CFP to a product is recorded in the database 20. The third accumulation process corresponds to a "tracking information recording step", and the functional unit of the processor 11 that executes the third accumulation process corresponds to an "information recording unit". Line information related to the production line that has manufactured the product is used as the tracking information.

Specifically, in the third accumulation process associated with manufacturing or processing of the product, the manufacturing or processing time $T_{N,j}$ is recorded for the product being manufactured or processed (S61). The time $T_{N,j}$ is time information when the product was manufactured or processed on the line with the name N, and is information indicating a date and time. The data processing server 10 records the time $T_{N,j}$ in the traceability information of the database 20 in association with the product together with the name N for identifying the production line (S62). The time $T_{N,j}$ and the name N of the line correspond to the above-mentioned "tracking information" and "line information". The time $T_{N,j}$ corresponds to the "processing date and time" associated with L1 and L3 lines (see FIG. 3).

The data processing server 10 determines whether there is a replacement or repair of the processing machine or molding die (S63). When there is a replacement or repair (S63: YES), the replacement or repair process is performed (S7). On the other hand, when there is no replacement or repair (S63: NO), the data processing server 10 associates the provisional approximate value obtained by estimating the unconfirmed portion of GHG emissions, which is used as a substitute for the unconfirmed CFP, with the product and records it in the traceability information of the database 20 (S64). The variable j is counted up (S44), and the processes of S61 to S64 are repeated. The approximate value recording process in S64 may be omitted or may be performed at a different timing from the third accumulation process. In the CFP disclosure process (see S111 in FIG. 10), which will be described later, a process of setting an approximate value may be performed.

<Information Processing Flow: Fourth Accumulation Process S8>

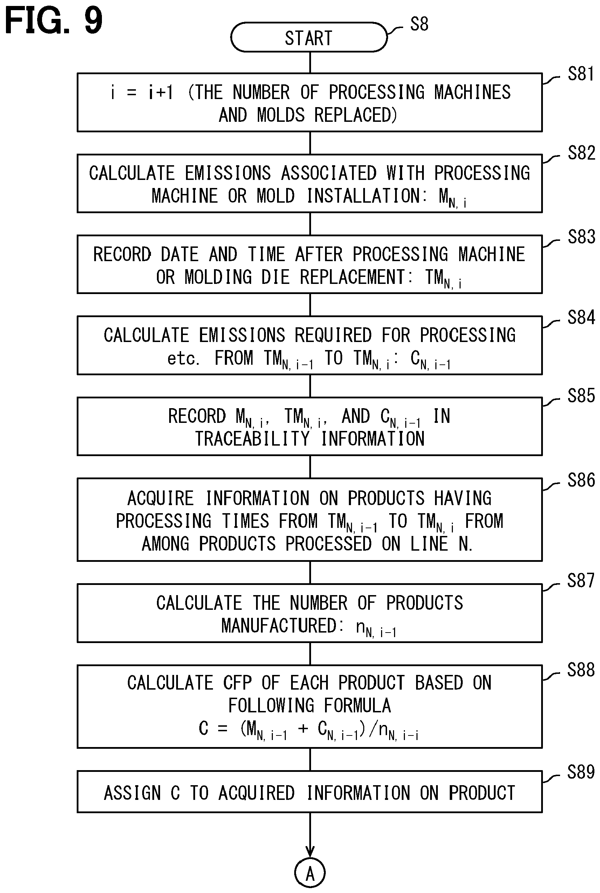

In the fourth accumulation process (S8) shown in FIG. 9, an unconfirmed CFP is confirmed as a processing machine or a molding die is replaced or repaired. The fourth accumulation process corresponds to a "calculation step" of the emissions to be assigned to the target object, and the functional unit of the processor 11 that executes the fourth accumulation process corresponds to an "emissions calculation unit". In the fourth accumulation process, after confirming the unconfirmed CFP, the GHG emissions, that is, the carbon footprint, to be assigned to each product (target object IM) is calculated using the CFP distribution number, which is one of the confirmed information.

Specifically, in the fourth accumulation process (S8) associated with the replacement or repair of a processing machine or a molding die, the data processing server 10 or the data processing terminal 50 counts up the variable i (S81). Through such a process, the variable i becomes a serial number that is counted up when the unconfirmed CFP is confirmed.

The data processing server 10 calculates the GHG emissions $M_{N,i}$ associated with the current installation of processing machines, molding dies, or the like (S82). The data processing server 10 records $TM_{N,i}$, which is a line operation start time (date and time) after changing the processing machine or molding die (S83). The time $TM_{N,i}$ is time information indicating a switching date and time of the variable i. Therefore, the period from time $TM_{N,i-1}$ to time $TM_{N,i}$ corresponds to the period from mold change A to mold change B, the period from mold change B to mold change C, or the like (see FIG. 2).

The data processing server 10 calculates GHG emissions $C_{N,i-1}$ required for manufacturing or processing from time $TM_{N,i-1}$ to time $TM_{N,i}$ (S84). The GHG emissions $C_{N,i}$ is total GHG emissions used for processing during the period associated with the variable i. The data processing server 10 records the GHG emissions $M_{N,i}$, time $TM_{N,i}$, and GHG emissions $C_{N,i-1}$ in the traceability information (emissions information) of the database 20 (S85).

The data processing server 10 acquires information on products having processing times from time $TM_{N,i-1}$ to time $TM_{N,i}$ from among the products processed on the line with the name N, using information on time $T_{N,j}$ associated with the product (S86). The data processing server 10 calculates the number of products manufactured $n_{N,i-1}$ based on the acquired product information (S87). The number of products manufactured $n_{N,i-1}$ corresponds to the above-mentioned CFP distribution number. The data processing server 10 calculates the carbon footprint per product based on Formula 1 below (S88).

$$C = (M_{N,i-1} + C_{N,i-1})/n_{N,i-1} \dots \text{(Formula 1)}$$

The data processing server 10 assigns the calculated carbon footprint to the acquired emissions information associated with the product (S89). The data processing server 10 records the assigned carbon footprint (hereinafter referred to as assigned CFP) in the traceability information of each product as confirmed information. The variable j is counted up (S44), and manufacturing of the product is started (S5).

Here, the total value of the GHG emissions $M_{N,i}$ and $C_{N,i-1}$ calculated in the fourth accumulation process corresponds to the "total CFP" of the L1 and L3 lines shown in FIG. 3. The times $TM_{N,i-1}$ and $TM_{N,i}$ correspond to the "start date and time" and "end date and time" of the L1 and L3 lines shown in FIG. 3.

[Carbon Footprint Disclosure Process]

The data processing server 10 and the user terminal 110 disclose the carbon footprint (emissions information) of the target object IM to the end user EU and the like through a CFP disclosure process. Hereinafter, details of the CFP disclosure process will be described based on FIG. 10 and with reference to FIGS. 1 to 3.

In place of the user terminal 110, an information processing terminal owned by the trader, such as the data processing terminal 50, may be used for the CFP disclosure process. In this way, the present disclosure is not limited to the user terminal 110, and various information processing terminals such as smartphones, tablet terminals, and personal computers can be used to display carbon footprints.

The user terminal 110 activates the CFP inquiry application through a manipulation of the end user EU or the like (S101). The user terminal 110 reads identification information from the two-dimensional code Cd (or the RF tag) attached to the target object IM such as a product or a final product (S102). The identification information may be input manually using an input device such as a keyboard, or may be acquired through a network. The user terminal 110 transmits the read identification information to the data processing server 10 together with a CFP disclosure request for the target object IM (S103 and S104).

Upon acquiring the disclosure request (S104), the data processing server 10 specifies the target object IM that is the request subject (S105). The data processing server 10 searches the traceability information accumulated in the database 20 for emissions information associated with the target object IM, and acquires confirmed portion data (see confirmed CFP in FIG. 3) indicating a confirmed portion of emissions of the target object IM (S106). The confirmed CFP is a value (in kg) indicating the confirmed portion of GHG emissions assigned to the target object IM.

The data processing server 10 determines whether there is an unconfirmed portion (see unconfirmed CFP in FIG. 3) in the carbon footprint associated with the target object IM (S107). S107 corresponds to a "determination step" for determining whether there is an unconfirmed portion of emissions, and the functional unit of the processor 11 that executes S107 corresponds to an "unconfirmed portion determination unit". When there is no unconfirmed CFP (S107: NO), the data processing server 10 transmits the confirmed CFP acquired in S106 as provision data (emissions information of the target object IM) to the user terminal 110 that is the source of the disclosure request (S112 and S113).

On the other hand, when there is an unconfirmed CFP (S107: YES), the data processing server 10 searches for confirmed information corresponding to the unconfirmed CFP (S108). The confirmed information may be the above-mentioned CFP distribution number (the number of products manufactured in FIG. 3) and GHG emissions $M_{N,i}$ and $C_{N,i-1}$ (see FIG. 9), and may be the assigned CFP calculated in the fourth accumulation process (see FIG. 9). The data processing server 10 uses line information such as the line name and processing time recorded in the third accumulation process (see FIG. 8) as tracking information, and specifies confirmed information corresponding to an unconfirmed CFP from among a large amount of traceability information.

The data processing server 10 determines whether confirmed information is recorded in the traceability information (S109). When there is confirmed information to confirm the unconfirmed CFP (S109: YES), the data processing server 10 generates a confirmed CFP (updated confirmed data) by adding the emissions (assigned CFP) based on the confirmed information to the initial confirmed CFP acquired in S106 (S110). That is, the data processing server 10 recalculates the carbon footprint in S110. In this process, the data processing server 10 may use the recorded assigned CFP that has already been calculated, or may recalculate the assigned CFP based on Formula 1 above. The data processing server 10 transmits the updated confirmed CFP value, which is the updated confirmed data generated in S110, as provision data to the user terminal 110 that is the source of the disclosure request (S112 and S113).

When there is an unconfirmed CFP and there is no confirmed information to confirm the unconfirmed CFP (S109: NO), the data processing server 10 generates unconfirmed portion data indicating an unconfirmed portion of GHG emissions (S111). S111 corresponds to a "generation step" of unconfirmed portion data, and the functional unit of the processor 11 that executes S111 corresponds to a "data generation unit". The unconfirmed portion data may be an approximate value recorded as an unconfirmed CFP in the third accumulation process (see FIG. 8), or may be a notification flag indicating the existence of an unconfirmed CFP. The data processing server 10 transmits the confirmed CFP acquired in S106 and the approximate value or notification flag acquired in S111 as provision data to the user terminal 110 that is the source of the disclosure request (S112 and S113).

The data processing server 10 can calculate the carbon footprint of only the manufacturing process (current process) of the target object IM (current process CFP), as well as the accumulated value (accumulated CFP) of the carbon footprint up to the current process (see FIG. 3). When there is an unconfirmed CFP, the data processing server 10 provides the unconfirmed portion and the confirmed portion of each of the current process CFP and the accumulated CFP to the user terminal 110 as provision data. When there is confirmed information for only some of multiple unconfirmed CFPs, the data processing server 10 uses this confirmed information to perform both the process of generating updated confirmed data and the process of generating unconfirmed portion data regarding the unconfirmed CFP.

The user terminal 110 receives and acquires provision data (emissions information of the target object IM) from the data processing server 10 (S113 and S114). S114 corresponds to an "acquisition step" of emissions information, and the functional unit of the processor 111 that executes S114 corresponds to an "information acquisition unit". The user terminal 110 displays a value based on provision data on the display screen DP of the display 120 as the carbon footprint of the target object IM (S115). S115 corresponds to a "display step" of confirmed portion data and unconfirmed portion data, and the functional unit of the processor 111 that executes S115 corresponds to a "display control unit".

The user terminal 110 determines whether the provision data includes information indicating that there is an unconfirmed CFP (unconfirmed portion data). When there is no unconfirmed portion data, the user terminal 110 displays the confirmed CFP of the provision data on the display 120 (see the lower right diagram in FIG. 3). On the other hand, when the provision data includes an approximate value as unconfirmed portion data, the user terminal 110 displays the approximate value as an unconfirmed CFP on the display 120 together with the confirmed CFP (see the lower left diagram in FIG. 3). When the provision data includes a notification flag as unconfirmed portion data, the user terminal 110 displays, on the display 120, a message indicating "There is an unconfirmed carbon footprint" in addition to the confirmed CFP.

[Summary of First Embodiment]

In the first embodiment described so far, when there is an unconfirmed portion in the carbon footprint associated with the target object IM, unconfirmed portion data indicating the unconfirmed portion of the carbon footprint is generated. In this way, by separating the unconfirmed portion data from the confirmed portion data, it becomes possible to appropriately handle the unconfirmed portion of GHG emissions. As a result, it is possible to realize the use of primary data of carbon footprint, which is an actual value, as emissions information.

In the first embodiment, when there is confirmed information to confirm the unconfirmed portion of GHG emissions, the carbon footprint (assigned CFP) based on the confirmed information is added to the confirmed portion data indicating the initial confirmed CFP, and updated confirmed data is generated. According to the above, even when the carbon footprint cannot be confirmed immediately during manufacturing, an accurate carbon footprint can be calculated at the stage when the number of products manufactured or the like is confirmed. According to the above, it becomes possible to fairly allocate GHG emissions that occur irregularly to individual products.

In the first embodiment, a provisional approximate value prepared in advance is used as unconfirmed portion data. Therefore, even at the stage when the unconfirmed portion of GHG emissions is confirmed, it is possible to present an approximate value of the carbon footprint of the target object IM.

In the first embodiment, when there is an unconfirmed portion in the carbon footprint associated with the target object IM, unconfirmed portion data indicating the unconfirmed portion of the carbon footprint is displayed on the display 120 as an unconfirmed CFP. In this way, by separating the unconfirmed portion data from the confirmed portion data, it becomes possible to appropriately handle the unconfirmed portion of GHG emissions. As a result, the end user EU or the like who inquires about the carbon footprint can correctly ascertain the carbon footprint of the target object IM.

In the first embodiment, a provisional approximate value prepared in advance is displayed as unconfirmed portion data (unconfirmed CFP). Therefore, even when the end user EU or the like makes an inquiry before the unconfirmed portion of GHG emissions is confirmed, it is possible to ascertain the approximate value of the carbon footprint of the target object IM.

In the first embodiment, when there is an unconfirmed portion in the carbon footprint associated with the target object IM, tracking information is recorded in the database 20. Therefore, after confirming the unconfirmed portion, the emissions based on the confirmed information can be correctly assigned to the target object IM. As a result, it becomes possible to appropriately handle the unconfirmed portion of GHG emissions. The accuracy and fairness of the carbon footprint can be ensured.

In the first embodiment, line information related to the production line that has manufactured the target object IM is recorded in the database 20 as tracking information. By using such line information as tracking information, it becomes possible to reliably assign a confirmed portion of carbon footprint to the target object IM manufactured by the supplier SP at the stage when the number of products manufactured is confirmed due to a mold change or the like.

In the first embodiment, line information including a name N, which is unique identification information for identifying a production line, and time information indicating the date and time when a product was manufactured on the production line is recorded in the database 20. By using such line information as tracking information, at the timing when the unconfirmed carbon footprint due to mold changes or the like is confirmed, the confirmed portion of the carbon footprint can be appropriately assigned to individual products.

In the first embodiment, when there is an unconfirmed portion in the carbon footprint associated with the target object IM, a provisional approximate value obtained by estimating the unconfirmed portion of emissions is recorded in the database 20. Therefore, even at the stage when the unconfirmed portion of GHG emissions is confirmed, it is possible to present an approximate value of the carbon footprint of the target object IM.

In the first embodiment, the data processing server 10 corresponds to a "data processing system" and a "data accumulation system", and the user terminal 110 corresponds to a "data display device".

(Second embodiment)

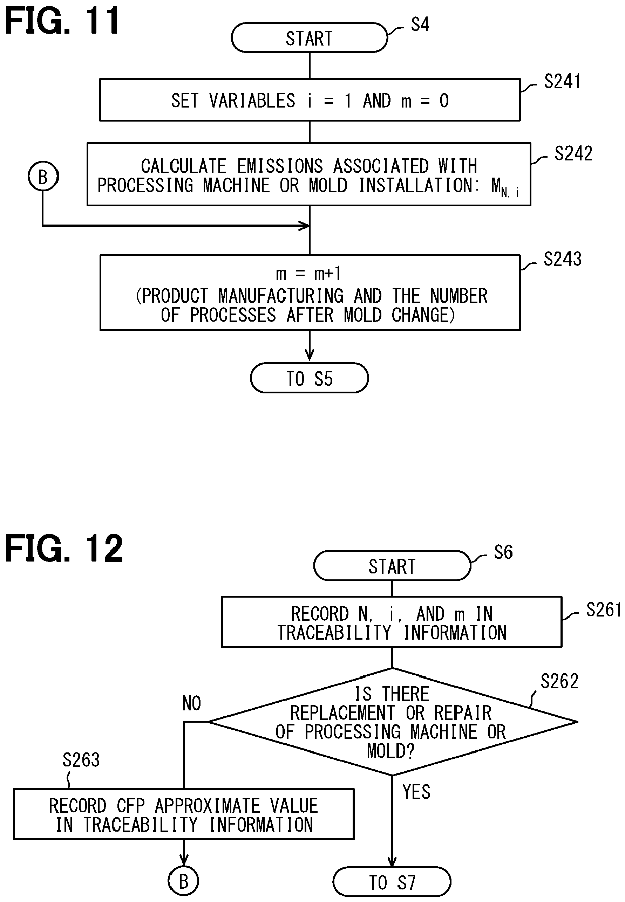

A second embodiment of the present disclosure shown in FIGS. 11 to 13 is a modification of the first embodiment. In the second embodiment, the contents of the second to fourth accumulation processes among the carbon footprint accumulation processes are different from the content of the first embodiment. Hereinafter, details of the second to fourth accumulation processes of the second embodiment will be described based on FIGS. 11 to 13 and with reference to FIGS. 1 and 3. In the second embodiment as well, the second to fourth accumulation processes are performed by the data processing server 10 cooperating with the data processing terminal 50.

<Information Processing Flow: Second Accumulation Process S4>

In the second accumulation process (S4) of the second embodiment shown in FIG. 11, variables i and m are set to 1 and 0, respectively, similarly to the first embodiment (S241). The variable m is a value indicating the the number of products manufactured after the current processing machine or molding die is installed, and is counted up as the products are manufactured. The data processing server 10 or the data processing terminal 50 sequentially calculates the GHG emissions $M_{N,i}$ associated with the installation of processing machines or molding dies (S242) and counts up the variable m (S243).

<Information Processing Flow: Third Accumulation Process S6>

In the third accumulation process (S6) of the second embodiment shown in FIG. 12, the process of recording the manufacturing or processing time $T_{N,j}$ (see S61 in FIG. 8) is omitted. In this third accumulation process, in addition to the unique name N that identifies the production line, the data processing server 10 records variables i and m in the traceability information of the database 20 in association with the product being manufactured (S261). The variable i is a value (serial number) that is counted up as the production line is changed, such as replacement or repair of processing machines or molding dies. The variable i is used as a value indicating the model number. As described above, the variable m is the number information indicating the manufacturing number after switching the variable i. The line name N and the variable i correspond to "tracking information" and "line information" in the second embodiment. In the CFP disclosure process (see FIG. 10), products with which confirmed information is associated are searched for using the line information (S108).

The data processing server 10 or the data processing terminal 50 determines whether there is a replacement or repair of the processing machine or molding die (S262). When there is a replacement or repair (S262: YES), the replacement or repair process is performed (S7). On the other hand, when there is no replacement or repair (S262: NO), the data processing server 10 associates the provisional approximate value obtained by estimating the unconfirmed portion of GHG emissions, which is used as a substitute for the unconfirmed CFP, and records it in the traceability information of the database 20 (S263).

<Information Processing Flow: Fourth Accumulation Process S8>

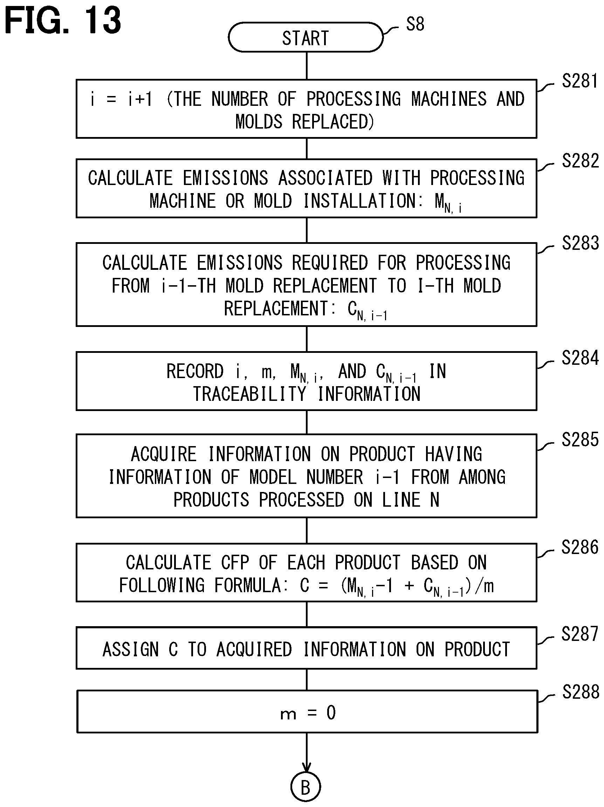

In the fourth accumulation process (S8) of the second embodiment shown in FIG. 13, as in the first embodiment, the variable i is counted up (S281), and the GHG emissions $M_{N,i}$ associated with the installation of the current processing machine, molding die, or the like are calculated (S282). The GHG emissions $C_{N,i-1}$ required for manufacturing or processing from the previous (i-1-th) mold replacement to the current (i-th) mold replacement are calculated (S283). The variables i and m and the GHG emissions $M_{N,i}$ and $C_{N,i-1}$ are recorded in the traceability information (emissions information) of the database 20 (S284).

The data processing server 10 acquires information on a product having information of a model number i-1 from among the products processed on the line with the name N (S285). The data processing server 10 calculates the carbon footprint per product based on Formula 2 below (S286).

$$C = (M_{N,i-1} + C_{N,i-1})/m \ldots \text{(Formula 2)}$$

The data processing server 10 assigns the calculated carbon footprint to the emissions information of the product having the information of the model number i-1 (S287). The variable m is reset and counted up in order (S288 and S243).

[Summary of Second Embodiment]

The second embodiment described so far also has the same effects as the first embodiment, and even when there is unconfirmed portion data, it is possible to appropriately handle the unconfirmed portion of GHG emissions.

In the second embodiment, the line information includes a name N, which is unique identification information for identifying the production line, and a variable i, which is counted up as the production line is changed. By using such line information as tracking information, at the timing when the unconfirmed carbon footprint due to changes in the production line or the like is confirmed, the confirmed portion of the carbon footprint can be appropriately assigned to individual products.

(Other embodiments)

Although multiple embodiments according to the present disclosure have been described above, the present disclosure is not construed as being limited to the above-mentioned embodiments, and can be applied to various embodiments and combinations within a scope not departing from the spirit of the present disclosure.

In the embodiments described above, confirmed portion data and unconfirmed portion data have been generated for each of the current process CFP and the accumulated CFP, and have been displayed as the confirmed CFP and the unconfirmed CFP. On the other hand, in a first modification of the embodiments described above, confirmed portion data and unconfirmed portion data are generated for only one of the current process CFP and the accumulated CFP, and the confirmed CFP and the unconfirmed CFP are displayed. In a second modification of the embodiments described above, confirmed portion data and unconfirmed portion data are generated only for the current process CFP, and both the confirmed CFP and the unconfirmed CFP are displayed. On the other hand, regarding the accumulated CFP, only confirmed portion data is generated, and only the confirmed CFP is displayed.

In a third modification of the embodiments described above, confirmed portion data for the initial confirmed CFP confirmed at the time of manufacturing and confirmed portion data for the additional confirmed CFP confirmed at a later date are respectively generated. As a result, the initial confirmed CFP and the additional confirmed CFP are displayed separately.

In a fourth modification of the embodiments described above, when an approximate value to replace the unconfirmed CFP is not registered in the database 20, the generated unconfirmed portion data and the displayed unconfirmed CFP are set to zero.

A part of the GHG emissions (carbon footprint) accumulated in the information processing system 100 may not be primary data. In such an information processing system 100, the proportion of primary data in the carbon footprint of the target object IM may be provided to the user terminal 110 as emissions information and displayed on the display 120. The percentage of traders who have acquired international standards related to carbon footprints (for example, ISO 14065 or the like), the percentage of GHG emissions of such traders, and the like may be provided to the user terminal 110 as emissions information and displayed on the display 120.

In the above embodiments, the confirmed portion data (including updated confirmed data) was a value indicating a confirmed portion of carbon footprint, and the unconfirmed portion data was a value indicating an unconfirmed portion of carbon footprint, or a notification flag indicating that there was an unconfirmed portion of carbon footprint. The data formats of such confirmed portion data and unconfirmed portion data may be changed as appropriate. For example, the unit of the carbon footprint is not limited to the above-mentioned "kg", and may be changed as appropriate depending on the type of target object IM, the region or country where the information processing system 100 is used, and the like.

In the above embodiments, each function provided by the data processing server 10 and each of the terminals 50 and 110 can be provided by software and hardware that executes the software, only software, only hardware, or a complex combination thereof. When these functions are provided by electronic circuits as hardware, each function can also be provided by digital circuits that include a large number of logic circuits, or by analog circuits.

Each processor in the above embodiments may include at least one arithmetic core such as a central processing unit (CPU) and a graphics processing unit (GPU). The processor may further include a field-programmable gate array (FPGA), a neural network processing unit (NPU), an IP core with other dedicated functions, and the like. The processor may be individually mounted on a printed circuit board. Alternatively, a configuration implemented in an application specific integrated circuit (ASIC), a system on chip (SoC), an FPGA, or the like may correspond to the processor.

The form of the storage medium (non-transitory tangible storage medium) which is employed as each storage unit in the above embodiments and stores each program may be changed as appropriate. For example, the storage medium is not limited to a configuration provided on a circuit board, but may be provided in the form of a memory card or the like, inserted into a slot portion, and electrically connected to a bus of a computer. The storage medium may be an optical disc, a hard disk drive, or the like used as a source for copying or distributing a program to a computer.

The control unit and the method thereof described in the present disclosure may be implemented by a dedicated computer constituting a processor programmed to execute one or multiple functions embodied by a computer program. Alternatively, the device and the method thereof according to the present disclosure may be implemented by a dedicated hardware logic circuit. Alternatively, the device and the method thereof according to the present disclosure may be implemented by one or more dedicated computers implemented by a combination of a processor that executes a computer program and one or more hardware logic circuits. The computer program may be stored in a non-transitory tangible computer-readable recording medium as an instruction to be executed by a computer.

**[0096]** [0000] The above-described embodiments may have the following aspects.

(First aspect)

**[0097]** [0000] An information processing method for processing emissions information related to an amount of greenhouse gas emissions associated with a target object (IM), the information processing method comprising:
by at least one processor (111),

acquiring the emissions information of the target object (S114); and
displaying, when the emissions information includes unconfirmed portion data indicating an unconfirmed portion of the emissions in addition to confirmed portion data indicating a confirmed portion of the emissions, both the confirmed portion data and the unconfirmed portion data on a display screen (DP) (S115).

(Second aspect)

**[0098]** [0000] The information processing method according to the first aspect, wherein
the displaying of the unconfirmed portion data includes displaying, as the unconfirmed portion data, a provisional approximate value prepared in advance.

(Third aspect)

**[0099]** [0000] An information processing program for processing emissions information related to an amount of greenhouse gas emissions associated with a target object (IM), the information processing program causing at least one processor (111) to execute:

acquiring the emissions information of the target object (S114); and
displaying, when the emissions information includes unconfirmed portion data indicating an unconfirmed portion of the emissions in addition to confirmed portion data indicating a confirmed portion of the emissions, both the confirmed portion data and the unconfirmed portion data on a display screen (DP) (S115).

(Fourth aspect)

**[0100]** [0000] A data display device that displays emissions information related to an amount of greenhouse gas emissions associated with a target object (IM), the data display device comprising:

an information acquisition unit that is configured to acquire the emissions information of the target object (S114); and
a display control unit that is configured to display, when the emissions information includes unconfirmed portion data indicating an unconfirmed portion of the emissions in addition to confirmed portion data indicating a confirmed portion of the emissions, both the confirmed portion data and the unconfirmed portion data on a display screen (DP) (S115).

**[0101]** [0000] In the first to fourth aspects, when there is an unconfirmed portion of emissions associated with a target object, it is possible to generate or display unconfirmed portion data indicating the unconfirmed portion of emissions. In this way, by separating unconfirmed portion data from confirmed portion data, it becomes possible to appropriately handle the unconfirmed portion of greenhouse gas emissions.

(Fifth aspect)

**[0102]** [0000] An information accumulation method for accumulating, in a database (20), emissions information related to an amount of greenhouse gas emissions associated with a target object (IM), the information accumulation method comprising:
by at least one processor (11),

when there is an unconfirmed portion of the emissions associated with the target object, recording, in the database (S6), tracking information for linking confirmed information generated after confirming the unconfirmed portion to the target object; and calculating the emissions to be assigned to the target object using the confirmed information after confirming the unconfirmed portion (S8).

(Sixth aspect)

**[0103]** [0000] The information accumulation method according to claim 10, wherein

the recording of the tracking information includes recording, in the database, line information related to a production line as the tracking information, and the target object was manufactured in the production line.

(Seventh aspect)

**[0104]** [0000] The information accumulation method according to claim 11, wherein
the recording includes recording, in the database, the line information including unique identification information for identifying the production line and time information indicating a date and time when the target object was manufactured on the production line.

(Eighth aspect)

**[0105]** [0000] The information accumulation method according to claim 11, wherein
the recording includes recording, in the database, the line information including unique identification information for identifying the production line and a serial number that is counted up upon the production line being changed.

(Ninth aspect)

**[0106]** [0000] The information accumulation method according to any one of claims 10 to 13, wherein, when there is the unconfirmed portion of the emissions associated with the target object, a provisional approximate value obtained by estimating the unconfirmed portion of the emissions is recorded in the database (S64, S263).

(Tenth aspect)

**[0107]** [0000] An information accumulation program for accumulating emissions information related to an amount of greenhouse gas emissions associated with a target object (IM) in a database (20), the information accumulation program causing at least one processor (111) to execute:

when there is an unconfirmed portion of the emissions associated with the target object, recording, in the database (S6), tracking information for linking confirmed information generated after confirming the unconfirmed portion to the target object; and calculating the emissions to be assigned to the target object using the confirmed information after confirming the unconfirmed portion (S8).

(Eleventh aspect)

**[0108]** [0000] A data accumulation system for accumulating emissions information related to an amount of greenhouse gas emissions associated with a target object (IM) in a database (20), the data accumulation system comprising:

an information recording unit that is configured to record, in the database (S6), tracking information for linking confirmed information generated after confirming the unconfirmed portion to the target object when there is an unconfirmed portion of the emissions associated with the target object; and an emissions calculation unit that is configured to calculate the emissions to be assigned to the target object using the confirmed information after confirming the unconfirmed portion (S8).

**[0109]** [0000] In the fifth to eleventh aspects, when there is an unconfirmed portion of emissions associated with a target object, tracking information is recorded in the database. Therefore, after confirming the unconfirmed portion, the emissions based on the confirmed information can be correctly assigned to the target object. Therefore, it becomes possible to appropriately handle the unconfirmed portion of greenhouse gas emissions.

**Claims**

1. An information processing method for processing emissions information related to an amount of greenhouse gas emissions associated with a target object (IM), the information processing method comprising:
by at least one processor (11),

determining whether there is an unconfirmed portion of the emissions associated with the target object (S107); and

generating, when there is the unconfirmed portion of the emissions, unconfirmed portion data indicating the unconfirmed portion of the emissions in addition to confirmed portion data indicating a confirmed portion of the emissions (S111) as the emissions information of the target object.

2. The information processing method according to claim 1, further comprising:
generating, when there is confirmed information to confirm the unconfirmed portion of the emissions, updated confirmed data by adding the emissions based on the confirmed information to the confirmed portion data (S110).

3. The information processing method according to claim 1 or 2, wherein
the generating of the unconfirmed portion data includes using, as the unconfirmed portion data, a provisional approximate value prepared in advance.

4. An information processing program for processing emissions information related to an amount of greenhouse gas emissions associated with a target object (IM), the information processing program causing at least one processor (11) to execute:

determining whether there is an unconfirmed portion of the emissions associated with the target object (S107); and
generating, when there is the unconfirmed portion of the emissions, unconfirmed portion data indicating the unconfirmed portion of the emissions in addition to confirmed portion data indicating a confirmed portion of the emissions (S111) as the emissions information of the target object.

5. A data processing system for processing emissions information related to an amount of greenhouse gas emissions associated with a target object (IM), the data processing system comprising:

an unconfirmed portion determination unit that is configured to determine whether there is an unconfirmed portion of the emissions associated with the target object (S107); and
a data generation unit that is configured to generate, when there is the unconfirmed portion of the emissions, unconfirmed portion data indicating the unconfirmed portion of the emissions in addition to confirmed portion data indicating a confirmed portion of the emissions (S111) as the emissions information of the target object.

**FIG. 1**

EP 4 439 417 A1

FIG. 2

# FIG. 3

CARBON FOOTPRINT UNCONFIRMED ▷ CARBON FOOTPRINT CONFIRMED

LINE WHERE ALL CFP
CANNOT BE CONFIRMED

LINE WHERE ALL CFP
CANNOT BE CONFIRMED

**PROCESSING BY L1 LINE**
CONFIRMED CFP
■kg
UNCONFIRMED CFP
L1 LINE
PROCESSING DATE AND TIME □:□

**PROCESSING BY L2 LINE**
CONFIRMED CFP
◎kg
UNCONFIRMED CFP
L1 LINE

**PROCESSING BY L3 LINE**
CONFIRMED CFP
◆kg
UNCONFIRMED CFP
L1 LINE
L3 LINE
PROCESSING DATE AND TIME ◇:◇

**PROCESSING BY L1 LINE**
TOTAL CFP ★kg
THE NUMBER OF PRODUCTS MANUFACTURED ▽units
START DATE AND TIME ●:●
END DATE AND TIME ▲:▲

**PROCESSING BY L3 LINE**
TOTAL CFP ☆kg
THE NUMBER OF PRODUCTS MANUFACTURED ▽units
START DATE AND TIME ○:○
END DATE AND TIME △:△

CFP INQUIRY APPLICATION

110, 120

DP

CARBON FOOTPRINT OF CURRENT PROCESS

| CONFIRMED | 1234 | kg |
| UNCONFIRMED | 100 | (APPROX-IMATE) |

ACCUMULATED CARBON FOOTPRINT

| CONFIRMED | 1234567 | kg |
| UNCONFIRMED | 100 | (APPROX-IMATE) |

110, 120

DP

CARBON FOOTPRINT OF CURRENT PROCESS

| CONFIRMED | 1334 | kg |
| UNCONFIRMED | 0 | (APPROX-IMATE) |

ACCUMULATED CARBON FOOTPRINT

| CONFIRMED | 1234667 | kg |
| UNCONFIRMED | 0 | (APPROX-IMATE) |

EP 4 439 417 A1

# FIG. 4

FACTORY CONSTRUCTION OR LINE INSTALLATION ⌐ S1

↓

MEASURE OR CALCULATE EMISSIONS ASSOCIATED WITH
FACTORY CONSTRUCTION OR LINE INSTALLATION ⌐ S2

↓

INSTALLATION OF PROCESSING MACHINE OR MOLD ⌐ S3

↓

MEASURE OR CALCULATE EMISSIONS ASSOCIATED WITH
PROCESSING MACHINE OR MOLD INSTALLATION ⌐ S4

↓

PERFORM PROCESS SUCH AS PRODUCT
MANUFACTURING OR PROCESSING ⌐ S5

↓

◯ ← S6

↓

◯

↓

◯

↓

REPLACEMENT OR REPAIR OF PROCESSING MACHINE OR MOLD ⌐ S7

↓

MEASURE OR CALCULATE EMISSIONS ASSOCIATED WITH
REPLACEMENT OR REPAIR OF PROCESSING MACHINE OR MOLD ⌐ S8

# FIG. 5

START — S2

DEFINITION OF FACTORY AND LINE NAMES: N — S21

CALCULATE EMISSIONS ASSOCIATED WITH FACTORY CONSTRUCTION OR LINE INSTALLATION: $F_N$ — S22

REGISTER N AND $F_N$ TO DATABASE (BLOCKCHAIN) — S23

TO S3

# FIG. 6

FACTORY A

RAW MATERIALS etc.

LINE 1 → | PROCESSING MACHINE 1 | →

LINE 2 → | PROCESSING MACHINE 2 | →

LINE 3 → | PROCESSING MACHINE 3 | →

PRODUCTS etc.

N:FACTORY A · LINE 1 →　A01　or　0001
　FACTORY A · LINE 2 →　A02　or　0002
　FACTORY A · LINE 3 →　A03　or　0003

FACTORY B

RAW MATERIALS etc.

LINE 1 → | PROCESSING MACHINE 1 | →

LINE 2 → | PROCESSING MACHINE 2 | →

LINE 3 → | PROCESSING MACHINE 3 | →

PRODUCTS etc.

N:FACTORY B · LINE 1 →　B01　or　0004
　FACTORY B · LINE 2 →　B02　or　0005
　FACTORY B · LINE 3 →　B03　or　0006

**FIG. 7**

$$\boxed{\text{START}} \sim S4$$

$$\boxed{\text{SET VARIABLES } i = 1 \text{ AND } j = 0} \sim S41$$

$$\boxed{\begin{array}{c}\text{CALCULATE EMISSIONS ASSOCIATED WITH}\\\text{PROCESSING MACHINE OR MOLD INSTALLATION: } M_{N, i}\end{array}} \sim S42$$

$\text{(A)} \quad \boxed{\text{RECORD DATE AND TIME OF FIRST OPERATION: } TM_{N, i}} \sim S43$

$$\boxed{\begin{array}{c}j = j + 1 \text{ (PRODUCT MANUFACTURING AND}\\\text{THE NUMBER OF PROCESSES)}\end{array}} \sim S44$$

$$\boxed{\text{TO S5}}$$

**FIG. 8**

$$\boxed{\text{START}} \sim S6$$

$$\boxed{\begin{array}{c}\text{RECORD MANUFACTURING AND}\\\text{PROCESSING TIME: } T_{N, j}\end{array}} \sim S61$$

$$\boxed{\begin{array}{c}\text{RECORD N, } T_{N, j} \text{ IN TRACEABILITY}\\\text{INFORMATION}\end{array}} \sim S62$$

$$\left\langle\begin{array}{c}\text{IS THERE}\\\text{REPLACEMENT OR REPAIR OF}\\\text{PROCESSING MACHINE OR}\\\text{MOLD?}\end{array}\right\rangle \sim S63$$

NO

S64

$$\boxed{\begin{array}{c}\text{RECORD CFP APPROXIMATE VALUE}\\\text{IN TRACEABILITY INFORMATION}\end{array}}$$

YES

$\text{(A)}$

$$\boxed{\text{TO S7}}$$

# FIG. 9

START — S8

i = i+1 (THE NUMBER OF PROCESSING MACHINES AND MOLDS REPLACED) — S81

CALCULATE EMISSIONS ASSOCIATED WITH PROCESSING MACHINE OR MOLD INSTALLATION: $M_{N, i}$ — S82

RECORD DATE AND TIME AFTER PROCESSING MACHINE OR MOLDING DIE REPLACEMENT: $TM_{N, i}$ — S83

CALCULATE EMISSIONS REQUIRED FOR PROCESSING etc. FROM $TM_{N, i-1}$ TO $TM_{N, i}$: $C_{N, i-1}$ — S84

RECORD $M_{N, i}$, $TM_{N, i}$, AND $C_{N, i-1}$ IN TRACEABILITY INFORMATION — S85

ACQUIRE INFORMATION ON PRODUCTS HAVING PROCESSING TIMES FROM $TM_{N, i-1}$ TO $TM_{N, i}$ FROM AMONG PRODUCTS PROCESSED ON LINE N. — S86

CALCULATE THE NUMBER OF PRODUCTS MANUFACTURED: $n_{N, i-1}$ — S87

CALCULATE CFP OF EACH PRODUCT BASED ON FOLLOWING FORMULA
$C = (M_{N, i-1} + C_{N, i-1}) / n_{N, i-i}$ — S88

ASSIGN C TO ACQUIRED INFORMATION ON PRODUCT — S89

(A)

# FIG. 10

USER TERMINAL — 110

ACTIVATE CFP INQUIRY APPLICATION — S101

READ TWO-DIMENSIONAL CODE — S102

CFP DISCLOSURE REQUEST — S103

IDENTIFICATION INFORMATION, S104
DISCLOSURE REQUEST, etc.

DATA PROCESSING SERVER — 10

SPECIFY REQUEST TARGET — S105

ACQUIRE CONFIRMED CFP — S106

IS THERE UNCONFIRMED CFP? — S107   NO

YES   S108

SEARCH FOR CONFIRMED INFORMATION CORRESPONDING TO UNCONFIRMED CFP

IS THERE CONFIRMED INFORMATION? — S109   NO

YES   S110

UPDATE CONFIRMED CFP (CFP RECALCULATION)

ACQUIRE UNCONFIRMED CFP — S111

PROVIDE CFP DATA — S112

PROVISION DATA (EMISSIONS INFORMATION)

S113

ACQUIRE CFP DATA — S114

DISPLAY CFP — S115

# FIG. 11

START — S4

SET VARIABLES i = 1 AND m = 0 — S241

CALCULATE EMISSIONS ASSOCIATED WITH
PROCESSING MACHINE OR MOLD INSTALLATION: $M_{N, i}$ — S242

B

m = m+1
(PRODUCT MANUFACTURING AND THE NUMBER
OF PROCESSES AFTER MOLD CHANGE) — S243

TO S5

# FIG. 12

START — S6

RECORD N, i, AND m IN
TRACEABILITY INFORMATION — S261

IS THERE
REPLACEMENT OR REPAIR
OF PROCESSING MACHINE OR
MOLD? — S262

NO

YES

S263

RECORD CFP APPROXIMATE VALUE
IN TRACEABILITY INFORMATION

B

TO S7

# FIG. 13

START — S8

i = i+1 (THE NUMBER OF PROCESSING MACHINES AND MOLDS REPLACED) — S281

CALCULATE EMISSIONS ASSOCIATED WITH PROCESSING MACHINE OR MOLD INSTALLATION: $M_{N,i}$ — S282

CALCULATE EMISSIONS REQUIRED FOR PROCESSING FROM i-1-TH MOLD REPLACEMENT TO I-TH MOLD REPLACEMENT: $C_{N,i-1}$ — S283

RECORD i, m, $M_{N,i}$, AND $C_{N,i-1}$ IN TRACEABILITY INFORMATION — S284

ACQUIRE INFORMATION ON PRODUCT HAVING INFORMATION OF MODEL NUMBER i-1 FROM AMONG PRODUCTS PROCESSED ON LINE N — S285

CALCULATE CFP OF EACH PRODUCT BASED ON FOLLOWING FORMULA: $C = (M_{N,i}-1 + C_{N,i-1})/m$ — S286

ASSIGN C TO ACQUIRED INFORMATION ON PRODUCT — S287

m = 0 — S288

B

Europäisches
Patentamt

European
Patent Office

Office européen
des brevets

# EUROPEAN SEARCH REPORT

**Application Number**

EP 24 16 6413

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HE BIN ET AL: "Product carbon footprint for product life cycle under uncertainty", JOURNAL OF CLEANER PRODUCTION, vol. 187, 1 June 2018 (2018-06-01), pages 459-472, XP093187988, AMSTERDAM, NL ISSN: 0959-6526, DOI: 10.1016/j.jclepro.2018.03.246 * abstract * * page 461, column 2 - page 462, column 1; table 1 * * page 460, column 1, paragraph 1 * * page 464, column 1, paragraph 2 * * page 470, column 2, paragraph 2 * ----- | 1-5 | INV. G06Q10/06 |
| X | US 2011/191071 A1 (SARKISIAN MARK [US] ET AL) 4 August 2011 (2011-08-04) * paragraph [0007]; claim 1; figure 1 * ----- | 1-5 | |
| A | US 2010/042453 A1 (SCARAMELLINO THOMAS JOSEPH [US] ET AL) 18 February 2010 (2010-02-18) * the whole document * ----- | 1-5 | **TECHNICAL FIELDS SEARCHED (IPC)** G06Q |

The present search report has been drawn up for all claims

| Place of search | Date of completion of the search | Examiner |
|---|---|---|
| Munich | 22 July 2024 | Koblitz, Birger |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

                                    

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 6413

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2024

| Patent document cited in search report | Publication date | Patent family member(s) | Publication date |
|---|---|---|---|
| US 2011191071 A1 | 04-08-2011 | AU 2011209712 A1 | 12-07-2012 |
| | | CA 2785213 A1 | 04-08-2011 |
| | | CN 102870128 A | 09-01-2013 |
| | | EP 2529348 A1 | 05-12-2012 |
| | | JP 5813012 B2 | 17-11-2015 |
| | | JP 2013518201 A | 20-05-2013 |
| | | US 2011191071 A1 | 04-08-2011 |
| | | US 2013304435 A1 | 14-11-2013 |
| | | US 2016267140 A1 | 15-09-2016 |
| | | WO 2011094258 A1 | 04-08-2011 |
| US 2010042453 A1 | 18-02-2010 | US 2010042453 A1 | 18-02-2010 |
| | | WO 2010019235 A1 | 18-02-2010 |

EPO FORM P0459

For more details about this annex : see Official Journal of the European Patent Office, No. 12/82

**REFERENCES CITED IN THE DESCRIPTION**

**Patent documents cited in the description**

• JP 7178064 B